(19) Europäisches Patentamt
European Patent Office
Office européen des brevets

(11) **EP 3 903 239 B1**

(12) **EUROPEAN PATENT SPECIFICATION**

(45) Date of publication and mention
of the grant of the patent:
**04.03.2026 Bulletin 2026/10**

(51) International Patent Classification (IPC):
**G06N 3/045** (2023.01)    **G06N 3/047** (2023.01)
**G06N 3/082** (2023.01)

(21) Application number: **20701992.8**

(52) Cooperative Patent Classification (CPC):
**G06N 3/086; G06N 3/045; G06N 3/0455;
G06N 3/047; G06N 3/0475; G06N 3/082;
G06N 3/0895; G06N 3/098; G06N 3/0985**

(22) Date of filing: **23.01.2020**

(86) International application number:
**PCT/EP2020/051682**

(87) International publication number:
**WO 2020/152296 (30.07.2020 Gazette 2020/31)**

(54) **IDENTIFYING NEURAL NETWORKS THAT GENERATE DISENTANGLED REPRESENTATIONS**

IDENTIFIZIERUNG NEURONALER NETZWERKE ZUR ERZEUGUNG ENTWIRRTER
DARSTELLUNGEN

IDENTIFICATION DE RÉSEAUX NEURONAUX QUI GÉNÈRENT DES REPRÉSENTATIONS
DÉSENCHEVÊTRÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.01.2019 US 201962795953 P**

(43) Date of publication of application:
**03.11.2021 Bulletin 2021/44**

(73) Proprietor: **GDM Holding LLC
Mountain View, CA 94043 (US)**

(72) Inventors:
• **DUAN, Sunny Yunchen
London EC4A 3TW (GB)**
• **HIGGINS, Irina
London EC4A 3TW (GB)**

(74) Representative: **Marks & Clerk GST
1 New York Street
Manchester M1 4HD (GB)**

(56) References cited:
• FRANCESCO LOCATELLO ET AL: "Challenging Common Assumptions in the Unsupervised Learning of Disentangled Representations", ARXIV.ORG, CORNELL UNIVERSITY LIBRARY, 201 OLIN LIBRARY CORNELL UNIVERSITY ITHACA, NY 14853, 29 November 2018 (2018-11-29), XP081434249
• FRANCESCO LOCATELLO ET AL: "Challenging Common Assumptions in the Unsupervised Learning of Disentangled Representations", 29 November 2018 (2018-11-29), XP055679664, Retrieved from the Internet <URL:https://arxiv.org/pdf/1811.12359v2.pdf> [retrieved on 20200325]

**EP 3 903 239 B1**

**Description**

BACKGROUND

This specification relates to neural network systems and methods for generating disentangled representations of data items.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters. Locatello et al., "Challenging Common Assumptions in the Unsupervised Learning of Disentangled Representations", arXiv:1811.12359, evaluates models with different ways of learning disentangled representations and evaluates them across six disentanglement metrics, observing that well-disentangled models seemingly cannot be identified without access to ground-truth labels.

SUMMARY

This specification describes a method and corresponding system for automatically, that is without supervision, identifying a computer-implemented neural network which is able to generate a disentangled latent variable representation of an input data item. Such a disentangled latent variable representation can identify separate factors of variation responsible for the content of the data item, especially where the data item has a real-world origin. Examples include factors responsible for the appearance of an image data item, the sound of an audio data item, and the factors contributing to the sensed data in a sensor data item. Thus a neural network identified in this way can be used for characterizing a data item in terms of the disentangled latent variables which describe it. The method and system may be implemented as one or more computer programs on one or more computers in one or more locations. Some implementations of the method are adapted to parallel operation, for example on a distributed computing system.

The invention is set out in claim 1; further aspects are defined in the dependent claims.

In implementations determining the measure of similarity between the sets of latent representations of the trained neural networks is performed in parallel between pairs or groups of the trained neural networks - that is the determining is performed as a set of parallel tasks, optionally on a distributed computing system. Each task may comprise determining the measure of similarity between a pair or group of the trained neural networks. In some implementations the method includes training the neural networks, and this training may also be performed in parallel, that is as a set of parallel tasks, optionally on a distributed computing system.

Implementations of the method may be used to provide a service, or tool, in which a trained neural network is automatically provided for a user; such a service may be provided to a user by one or more remote servers. Such a service or tool may perform automatic parameter e.g. trained weight, or hyperparameter, search using the method. The measure of similarity, in particular the disentanglement score described later, may optionally be employed in conjunction with or separately from the method in a genetic or other evolutionary algorithm to perform automatic parameter e.g. trained weight, or hyperparameter, search.

In some implementations the latent representation comprises a vector of latent values. The encoder neural network may encode the data item as a set of parameters defining a posterior distribution for each of a set of latent variables of the trained neural network. For example the posterior distribution could be a multivariate Gaussian distribution parameterized by mean and standard deviation values for each variable, that is a vector of mean values and a vector of standard deviation values. The vector of latent values may be determined from the vector of mean values, or by sampling from the distribution. In some implementations the measure of similarity is determined between vectors of latent values; in principle, however, the distributions could be used. In some implementations the latent representation vector has the same dimension for each member of the pool.

Thus in implementations the method may comprise determining a multivariate posterior distribution for the latent representation of the input data item and determining the latent representation from the multivariate posterior distribution.

Implementations of the technique are inspired by the concept that for a particular dataset the disentangled representations should all be similar. In some implementations the measure of similarity is invariant to one or more of: i) permutation of an order of the latent values, ii) a sign of the latent values, and iii) whether the latent values of the latent representation of one of the trained neural networks are a subset of the latent values of the latent representation of another of the trained neural networks between which the similarity is being measured. However it is not essential for operation the method that all these conditions are satisfied.

Determining the measure of similarity between the sets of latent representations of the trained neural networks may comprise, for each of the trained neural networks, making a pairwise comparison between the trained neural network and each of *P* other trained neural networks in the pool. These other neural networks may be different from the neural network they are compared to an/or different to one another, e.g. as described later. The *P* other trained neural networks may be randomly sampled from the pool. The method may further comprise determining a disentanglement score for the trained neural network from the pairwise comparisons such as the later described "Unsupervised Disentanglement Ranking". This may be dependent upon a similarity of the latent representations of each pair of compared neural networks, that is of the trained neural network and one of the other trained neural networks. For example a similarity measure or disentanglement score for each of the *P* pairwise comparisons may be combined or aggregated to determine a disentanglement score for the trained neural network. The aggregation may be performed by averaging, e.g. by determining a median disentanglement score.

The pool of trained neural networks may comprise all neural networks which have been trained using an unsupervised training method, or the pool may be "seeded" with a neural network which has been trained using a supervised, or semi-supervised (e.g. SDVAE), training method, e.g. a Semi-supervised Disentangled VAE (ar-Xiv:1709.05047). This may use a ground truth generative process and/or attribute labels, in particular so that the pool includes a latent representation which is disentangled.

In implementations selecting one of the trained neural networks may comprise determining a ranking of the trained neural networks using the disentanglement score and selecting a highest ranking trained neural network. In general the disentanglement referred to in this specification need not be perfect.

As previously described, the latent representation may comprise a vector of latent values. Determining the disentanglement score for the pairwise comparison may thus comprise comparing a first set of vectors of latent values produced by encoding the set of evaluation data items using a first of the compared trained neural networks and a second set of vectors of latent values produced by encoding the set of evaluation data items using second of the compared trained neural networks. That is the latent representation of the (each) first neural network may be compared with the latent representation of each second neural network. The comparison may employ a similarity matrix in which each entry is a pairwise comparison of latent representations.

Thus in implementations each latent value is defined by a component of the vector of latent values, and comparing the first and second sets of vectors of latent values comprises determining a similarity matrix. In this matrix each entry represents a similarity between a set of first components of the first set of vectors and a set of second components of the second set of vectors. A similarity value for each entry in the similarity matrix may be determined by comparing the sets of latent values (from the set of evaluation data items) for the respective components of the vector of latent values. The disentanglement score may be determined from the similarity matrix; there are many ways of doing this and some are described later.

In some implementations determining a similarity between the set of first components of the first set of vectors and the set of second components of the second set of vectors may comprise determining a rank correlation between the set of first components and the set of second components, for example Spearman's rank correlation coefficient.

In some implementations a row of values for the similarity matrix may be determined by regressing the set of first components of the first set of vectors on each of the components of the second set of vectors, to determine a weight of each of the components of the second set of vectors for the row of values of the similarity matrix. Which are labelled rows and which are labelled columns of the matrix is arbitrary, depending for example upon which of the neural networks is labelled first and which is labelled second. The regression may be, for example, Lasso regression.

Comparing the first and second sets of vectors of latent values may include taking the absolute value of each entry in the similarity matrix, to facilitate sign invariance.

There are many ways in which a disentanglement score for a pair of neural networks may be determined from the similarity matrix. For example one or more maximum (or minimum) values in the matrix may be determined and/or values in the matrix may be combined and/or some aggregate representation of the matrix or of a part of the matrix may be determined. Determining the disentanglement score from the similarity matrix may comprise determining the disentanglement score from a largest entry in each row and/or column of the similarity matrix, optionally determining a (weighted) average of these.

In some implementations the neural networks may each comprise an encoder and a decoder or generator neural network. These may be trained jointly e.g. using an unsupervised learning technique; they may afterwards be used separately. They may be implemented e.g. using convolutional and/or fully-connected layers and/or recurrent techniques. The method may include obtaining such an encoder, decoder or generator neural network from the trained neural network provided by the method.

In some implementations each trained neural network comprises or consists of a trained variational autoencoder neural network (VAE). Such a VAE may comprise an input to receive the input data item, an encoder neural network configured to encode the input data item to determine a set of parameters defining the posterior distribution of the vector of latent values, a subsystem to sample from the posterior distribution to determine the latent values - though when comparing latent representations a parameter of the distribution, such as a mean of the distribution may be used, and a decoder neural network configured to receive the latent values and to generate an output data item representing the values of the set of latent variables. The VAE may be configured for training with an objective function which has a first term dependent upon a difference between the input data item and the output data item and a second term dependent upon a difference between the posterior distribution and a prior distribution of the latent values.

In broad terms a VAE encodes a data item to determine a latent representation of the data item and then uses a decoder to regenerate an approximation of the data item from the latent representation; it may therefore be trained using unlabeled data. After training a sample can be drawn from the prior distribution to generate an output data item. In general any type of encoder and decoder neural network may be employed. The data item values may be, for example, pixel values or sound signal values.

In general, where the trained neural networks are VAEs any type of VAE may be employed including, but not limited to: a simple VAE (D. P. Kingma, M. Welling, arXiv: 1312.6114 ); a β-VAE (Higgins et al. "β-VAE: Learning basic visual concepts with a constrained variational framework", ICLR, 2017); a δ-VAE (arXiv: 1901:03416; with built in mismatch between the prior and posterior distributions forcing the decoder to reply on the latent representation); a VQ(Vector Quantized)-VAE; a CCI(Controlled Capacity Increase)-VAE; a TC(Total Correlation)-VAE; a DIP(Disentangled Inferred Prior)-VAE; and VAEs employing metrics such as a Factor-VAE metric, a Mutual Information Gap (MIG) metric, and VAEs employing DCI disentanglement scores. Autoencoder variants such as a denoising autoencoder may also be used.

In another implementation each trained neural network may comprise a trained InfoGAN-type neural network (arXiv:1606.03657). For example each trained neural network may comprise a generator neural network trained to generate an example data item responsive to a (noise) seed and a latent code, followed by a discriminator neural network trained to discriminate example data item from real data and output a probability that the example data item is real. An auxiliary (Q) network, for example another head on the discriminator, may output parameters defining a distribution of the latent code, which may be used as previously described when comparing the latent representations (e.g. by taking the mean, or sampling).

As previously described, in some implementations the latent representation vector has the same dimension for each neural network in the pool i.e. each neural network in the pool may have the same number of latent values. However this is not essential as the described similarity measures can account for subsetting, where one of the neural networks learns to encode a subset of the data generative latent values of another of the neural networks. The neural networks in the pool may be of the same type (e.g. VAEs), or the described techniques may be used to compare representations of different types of neural network. When comparing the same type of neural network the neural networks may differ in their hyperparameter values and/or parameter (weight) initialization or seed values when trained. (Unlike the neural network weights/parameters which are learned during training, the one or more hyperparameters are typically specified before training starts).

The hyperparameter values may define structural features such as numbers of layers, nodes per layer, types of connection (e.g. convolutional or fully-connected), skip connections, convolutional receptive field size, convolutional stride, number of filters, a dimension of the latent representation, and so forth. However in some implementations each neural network in the pool has the same architecture and the hyperparameter values define one or more global values for training the neural network, such as one or more hyperparameter values of an optimization function used during the training, e.g. the weight of a regularization constant multiplying a regularization term of the optimization function. For example in the case of a β-VAE the hyperparameter values may define different values for the regularization constant β multiplying the regularization term of the optimization function, such as a KL (Kullback-Leibler) divergence term, which measures the difference between the posterior and prior distributions. Setting $\beta > 1$ encourages disentangled latent representations (see e.g. arXiv:1804.03599). In an InfoGAN the parameter λ serves a similar function, multiplying a mutual information regularization term defining mutual information between the latent code and the generator output. Other hyperparameter values defining one or more global values for training the neural network may include learning rate, activation function, type of stochastic gradient descent, and dropout regularization.

The method may include training the neural networks of the pool; this may be unsupervised training. The training may comprise receiving training data items, providing each of these to an input of the neural network, and determining a gradient of an objective function based on a difference between the training data item and a corresponding output of the neural network. The training may further involve backpropagating the gradient through the neural network, e.g. using stochastic gradient descent (SGD), to adjust parameters of the neural network to optimize the objective function. In VAE training a sampling node may be replaced by a deterministic operation with a noise input, to allow a gradient to flow through the node.

The method may be used to select one or more of the trained neural networks using the measure of similarity. Starting with one or more neural network(s) with a disentangled latent representation, these may then be further refined to improve the disentangled latent representation, for example using a Bayesian search and/or by applying an evolutionary approach to the hyperparameter and/or seed values. For example an evolutionary approach may generate multiple offspring from the selected neural network(s) by randomly modifying the hyperparameter and/or seed values and/or by combining (breeding) the selected neural networks, and one or more of these may then be trained and selected using the previously described method, effectively using the measure of similarity as a fitness measure.

In implementations, as described further below, the data item may comprise one or more of: a digitized still or moving image, a digitized audio signal, and a digital representation of a text string. Thus an input data item may comprise a series of values in a time and/or frequency domain defining a sound waveform; or pixel values for an image such as brightness and/or color values e.g. captured from an image sensor such as a camera or LIDAR sensor; or values representing characters, word pieces, or words. A decoder or generator of the trained neural network selected by the method may provide corresponding output data items.

The method may further comprise using the provided computer-implemented neural network with the disentangled latent variable representation in i) a classification neural network system, ii) a reinforcement learning neural network system; in particular to provide systems for these purposes. For example, when used in a classification neural network system, the system may be configured to recognize a person or object, or speech or a speaker, for example for user/speaker authentication.

In general the methods and systems described herein may be applied to real-world data, i.e. data captured from a real-world environment. This is because such data may often have underlying generative factors which naturally disentangle.

The trained neural network, in particular an encoder of the trained neural network, may be also used to compress data items; these may be data items of the same type as used to train the neural network. An input data item may be encoded by a trained neural network provided by the above described method into disentangled latent variable representation, which is then stored or transmitted. When retrieved or received the input data item may be regenerated from the disentangled latent variable representation e.g. by a decoder or generator neural network as previously described. In this way compressed data storage and/or reduced bandwidth data transmission may be achieved.

In another example, the encoder may be used as a front end for another machine learning system, for example a classifier. Because the encoder has learned the distribution of the training data items, and in particular has learned a disentangled representation of these data items, a classifier trained/operating on the disentangled representation may perform better than a classifier trained on the raw data items. Such a classifier may be configured to perform an image or sound processing task in which case an output of the classifier may comprise class labels and/or space/time location data for input data items; or a speech recognition task, in which case an output may comprise recognized words, wordpieces, or phrases in a natural language.

In another example, the selected trained neural network may be used to provide the disentangled representations in a Symbol-Concept Association Network (SCAN) e.g. of the type described in arXiv:1707.03389, that is a system able to learn grounded visual concepts through symbol association, in implementations unsupervised.

In another example, the selected trained neural network may be used to make a personalized recommendation for a user. For example where the neural networks have been trained using data items comprising identifiers of items/content which a user has selected, e.g. playlists, the latent representation may characterize the user's taste in human-interpretable terms.

In another example the encoder may be used as a front end for a reinforcement learning (RL) system. In such an RL system the learned latent variable distribution may be used to represent an image of an environment in which the RL system operates and/or to encode other sensor data such as data representing state of a mechanical agent, such as the configuration of a robot arm, and more generally data such as pose data and/or position/velocity/acceleration data, or data characterizing a state of an industrial plant or data center such as sensed electronic signals such as sensed current and/or temperature signals. The reinforcement learning system may, in general, be of any type e.g. a policy-based system such as Advantage Actor Critic (A3C), a Q-learning system such as Deep Q- learning Network (DQN), or a distributed reinforcement learning system such as IMPALA (Importance-Weighted Actor-Learner).

In broad terms a reinforcement learning system is a system that selects actions to be performed by a reinforcement learning agent interacting with an environment. In order for the agent to interact with the environment, the system receives data characterizing the current state of the environment (an observation) and selects an action to be performed by the agent in response to the received data. The observation at a time step may include data from a previous time step e.g., the previous action, a reward received at the previous time step, and so forth.

The environment may be a real-world environment and the agent may be an electromechanical agent interacting with the real-world environment. For example, the agent may be a robot or other static or moving machine interacting with the environment to accomplish a specific task, e.g., to locate an object of interest in the environment or to move an object of interest to a specified location in the environment or to navigate to a specified destination in the environment; or the agent may be an autonomous or semi-autonomous land or air or sea vehicle navigating through the environment. In these implementations, the observations may include images and/or sensor data to capture observations as the agent interacts with the environment, and optionally data characterizing a current state of the agent e.g. position, linear or angular velocity, force, torque or acceleration, and/or global or relative pose of one or more parts of the agent. The actions may be control inputs to control a robot, e.g., torques for the joints of the robot or higher-level control commands; or to control an autonomous or semi-autonomous land or air or sea vehicle, e.g., torques to the control surface or other control elements of the vehicle or higher-level control commands; or e.g. motor control data. The actions may include position, velocity, or force/torque/acceleration data for one or more joints of a robot or parts of another mechanical agent; and/or actions to control navigation e.g. steering, and movement e.g braking and/or acceleration of a vehicle. In some implementations the environment is a similar simulated environment and the agent is implemented as one or more computers interacting with the simulated environment.

In the case of an electronic agent the observations may include data from one or more sensors monitoring part of a plant or service facility such as current, voltage, power, temperature and other sensors and/or electronic signals representing the functioning of electronic and/or mechanical items of equipment. In some applications the agent may control actions in a real-world environment including items of equipment, for example in a facility such as: a data center, server farm, or grid mains power or water distribution system, or in a manufacturing plant or service facility. The observations may then relate to operation of the plant or facility. For example additionally or alternatively to those described previously they may include observations of power or water usage by equipment, or observations of power generation or distribution control, or observations of usage of a resource or of waste production. The agent may control actions in the environment to increase efficiency, for example by reducing resource usage, and/or reduce the environmental impact of operations in the environment, for example by reducing waste. For example the agent may control electrical or other power consumption, or water use, in the facility and/or a temperature of the facility and/or items within the facility. The actions may include actions controlling or imposing operating conditions on items of equipment of the plant/facility, and/or actions that result in changes to settings in the operation of the plant/facility e.g. to adjust or turn on/off components of the plant/facility. In still other applications the RL system may be configured for automatic routing to electrically connect components of an integrated circuit such as an ASIC, and agent may control routing actions which connect the components.

A decoder or generator of the selected trained neural network may also have independent utility. The selected trained neural network has a disentangled latent representation and the "code" this represents may be meaningful and interpretable in terms of true generative factors of the data items. Thus each dimension of the latent representation may correspond to a human-interpretable aspect of a generated data item, such as the color of an object or the orientation or identity of a face, or sound representing a particular item of text. This in turn may allow data item sample with particular attributes to be generated e.g. an object of a specific color or shape.

Particular embodiments of the subject matter described in this specification can be implemented so as to realize one or more of the following advantages.

Whilst VAE (Variational AutoEncoder) based neural networks can generate disentangled representations the quality of the disentanglement across data sets depends on the choice of hyperparameters and even on the model seed. There are disentanglement metrics but these generally require supervised knowledge, and hitherto there has been no way of identifying a model with good disentanglement without supervision, for example to facilitate a hyperparameter search. The methods described herein allow unsupervised selection of models with good disentanglement. Broadly, they rely on the intuition that, for a particular data set, disentangled representations should all be similar (up to a permutation) whilst every entangled representation may be entangled in its own way.

The described methods can provide a computer-implemented neural network with a relatively disentangled latent representation of an input data item in a data set. In a disentangled representation a dimension of the latent representation encodes only one data generative factor for the data set - that is each latent value should be sensitive to changes in a single generative factor, while being relatively invariant to changes in other factors. These factors tend to be those which represent interpretable aspects of the encoded data; a transformation of the represented information (e.g. world state) may change only one of these factors whilst leaving the others unchanged. For example a neural network trained on a dataset of 3D objects might learn independent latent representation dimensions sensitive to factors such as object identity, position, shape, size, scale, lighting or color. In the case of a face the latent representation dimensions may represent features of the face such as eye shape/color, mouth size/position, expression, identity, and so forth. Thus disentangled representations tend to represent independent/ distinguishable entities in the input data; they also tend to be smooth. The ability to separate out the underlying structure of the real world into disjoint parts of its representation can provide substantial advantages.

Such a representation tends to be very data efficient representing a high degree of data compression. Thus such a disentangled latent representation may provide very efficient encoding of a data item for storage in memory and/or communication e.g. over a network. Implementations of the described methods may therefore provide reduced memory usage when storing data and/or reduced bandwidth requirements when transmitting data. A disentangled latent representation can also facilitate data efficient training of a machine learning system using the disentangled latent representation, that is training the machine learning system faster, and/or with less data, and/or to achieve better final performance.

A neural network using a disentangled representation as described herein tends to be good at data classification tasks such as image classification, sound classification (including speech recognition), text classification, and the classification of the other types of data especially real-world derived data. This may be because it is able to use internal representations which already identify generative factors underlying the classified data items. Correspondingly, when used in conjunction with a decoder/generator the disentangled representation can help to generate output data items with improved fidelity e.g. to the real world, such as data items with more detail and/or improved accuracy.

A neural network with disentangled representation as described herein may also improve the performance of a reinforcement learning system, for example by allowing the system to learn faster, that is with less experience, and more effectively, thus reducing memory and computing requirements for such systems. Thus such a reinforcement learning system may be trained using the disentangled representations from a neural network provided as described herein additionally or alternatively to training on direct observations of an environment.

The disentangled latent representation may further provide an advantage of explainability in a neural network system. For example an internal disentangled latent representation may be made accessible or interrogated, and may provide a human-interpretable representation that facilitates understanding of a behaviour of the system. For example the internal disentangled latent representation may show which entities and/or properties of entities in the input data contributed to an output of the system, in a reinforcement learning system a control output e.g. for a car, robot, or other mechanical agent. Reference to the disentangled latent variables, representing the observations upon which actions are based, can give insight into the way an autonomous agent under control of a machine learning system is acting. This information may also be useful for regulatory and other purposes since, if the motivations for the actions of an autonomous system can be discerned, it may be easier to decide whether or not to trust such a system.

Some implementations of the methods described herein enable a system to automatically identify a neural network with the most disentangled representation of a dataset without ground truth attribute labels. The pairwise comparisons used in implementations of the methods are highly parallelizable, and thus some implementations of the method are particularly suited to parallel and/or distributed computing architectures, especially where such an architecture is also used to train neural network in parallel with different initializations and/or hyperparameters to provide the pool of trained neural networks to implement the method.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 shows a system for unsupervised model selection for disentangled representation learning.
FIG. 2 is a flow diagram of an example process for providing a trained neural network with a disentangled latent variable representation.
FIG. 3 is a schematic illustration of the process of FIG. 2.
FIG. 4 is a flow diagram of an example process to compare a pair of trained neural networks.
FIGS. 5a-5c show, respectively, a schematic illustration of a similarity matrix, examples of similarity matrices calculated using rank correlation and Lasso regression, and examples of calculated similarity matrices for entangled and disentangled latent variable representations.
FIG. 6 illustrates behavior of disentangled latent variables in a trained neural network.

Like reference numbers and designations in the various drawings indicate like elements.

DETAILED DESCRIPTION

Real-world and simulated real-world data tends to have a factorized structure. For example objects in the real world are often described by a number of independent factors of variation such as color, size, shape, and pose, or more complex factors such as the number of wheels on a vehicle. These are useful to determine because they have semantically meaningful compositionality and should therefore facilitate subsequent machine learning tasks, as well as supporting the transfer of learning across different tasks.

Disentangled representations of data can improve data efficiency, generalization and fairness, but models which are able to learn disentangled representations often vary in the quality of the disentanglement. There is therefore a need to be able to select or tune a model. The quality of disentanglement can be measured with supervised techniques, but it would be useful to be able to use unsupervised techniques for training the models because of the vastly larger amount of data then available.

The techniques described herein rely on the intuition that, for a particular data set, disentangled representations should all be similar whilst every entangled representation may be entangled in its own way. That is the latent variable representations of well-disentangled models should be similar. When comparing latent variable representations allowance should be made for permutation, where the models encode the same underlying generative factors using different latent variables; subsetting, where one model learns a subset of the factors that another model learnt; and sign inversion, where one model encodes e.g. size from large-to-small and another size from small-to-large.

In implementations the described techniques perform a pairwise comparison between trained models, e.g. obtained using a hyperparameter search. This is used to score the models to identify those which are well-disentangled.

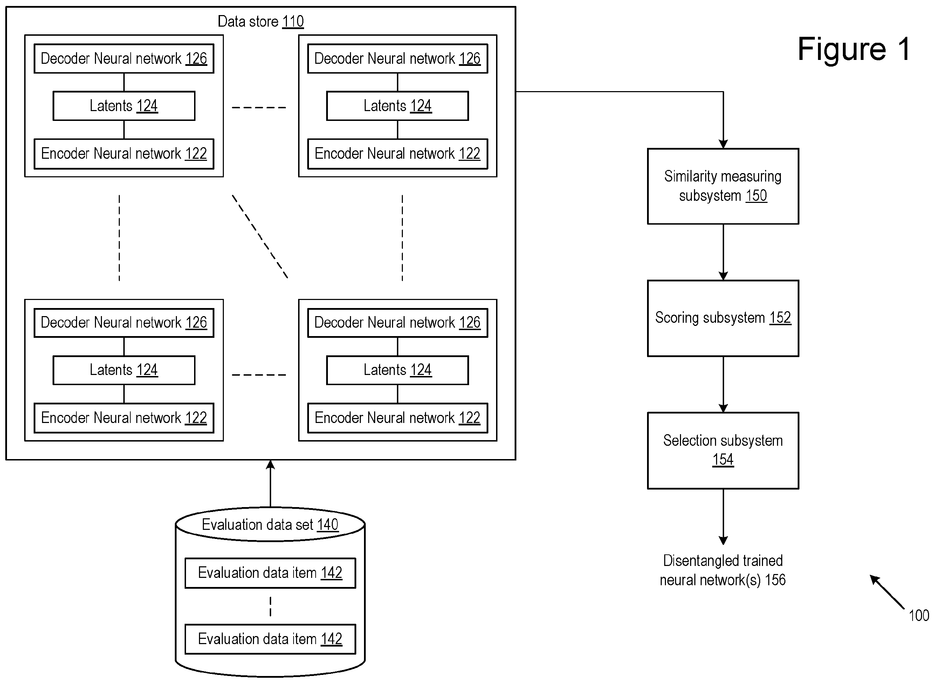

FIG. 1 shows a system 100 for unsupervised model selection for disentangled representation learning. The system may be implemented as computer programs on one or more computers in one or more locations. The system has a data store 110 holding a pool of trained neural networks 120A..N. Each trained neural network 120 includes at least an encoder neural network 122A..N configured to generate a latent variable representation 124A..N of an input data item.

In some implementations the trained neural networks 120A..N comprise variational autoencoders (VAEs) or variants thereof and therefore each may include (at least during training) a decoder neural network 126A..N. However the techniques described herein may be used with non-VAE based disentangled representation learning neural network models such as DC-IGN (Deep Convolutional Inverse Graphics Network, arXiv:1503.03167). In general the trained neural network models do not even have to be of the same type as disentangled representations from different models can be compared.

As indicated, the neural networks 120A..N have different respective neural network parameters e.g. different weights or biases. These may result from training with different hyperparameters and/or different initial seeds (i.e. different values to which the parameters are initialized during training). In general the neural network parameters are modified by an iterative training process but the hyperparameters are not.

The methods described herein start with a set of trained neural networks and evaluate their latent variable representations 124A..N. Thus the system 100 may have access to an evaluation data set 140 comprising a set of evaluation data items 142. The evaluation data items may be of the same type as those for which the trained neural network will eventually be used e.g. images, audio data, sensor data, and may include similar content.

A similarity measuring subsystem 150 determines a measure of similarity between the latent variable representations 124A..N of pairs of the evaluation data items 142 from the trained neural networks 120A..N. A scoring subsystem 152 then assigns each of the trained neural networks a score or rank using the results of the pairwise comparisons, in particular an "Unsupervised Disentanglement Ranking" (UDR), as described further below. A selection subsystem 154 may then select one or more of the highest ranking neural networks to provide a trained neural network 156 with a disentangled latent variable representation, for example for use as described below.

A selected trained neural network with a disentangled latent variable representation is used to process a data item such as an image, audio or sensor data item, to identify real-world factors responsible for generating the data item. This information can be useful, for example, for characterizing a data item, e.g. in terms of the latent variables which describe it. For example an image of a vehicle may be characterized in terms of its color, number of wheels, size, pose, and so forth. An audio data item representing a sound may similarly be characterized in terms of the generative factors which contribute to the sound; or a sensor data item be characterized in terms of the generative factors which contribute sensed data in the sensor data item. Other types of data item may be similarly characterized in terms of their underlying generative factors.

In another application a selected trained neural network may be used to provide a disentangled representation to another machine learning system. For example the selected trained neural network may be used for image processing, to provide a disentangled representation of one or more images to a machine learning system which is configured to identify or classify one or more still or moving objects in the image(s).

In another example the selected trained neural network may be used for audio data processing, to provide a disentangled representation of audio data to a machine learning system which is configured to identify sounds, recognize speech, or convert speech to text.

In another example the selected trained neural network may be used for sensor data processing for a reinforcement learning system controlling a machine such as a robot or vehicle, to provide a disentangled representation of the sensor data (which may include image and/or audio data) to the reinforcement learning system which is configured to control mechanical operation of the machine.

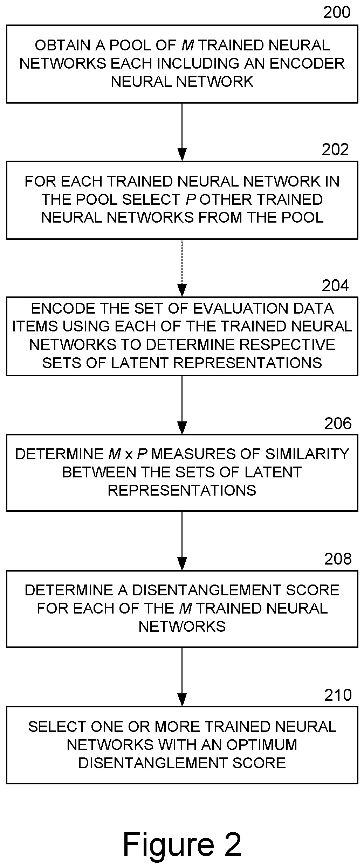

FIG. 2 is a flow diagram of an example process for providing a trained neural network with a disentangled latent variable representation. The process may be performed by a system of one or more computers in one or more locations, for example the system of FIG. 1.

Initially a pool of trained neural networks is obtained (step 200), each comprising at least an encoder neural network to encoder an input data item as a latent representation of the data item. For example, the process may train a pool of $M = H \times S$ neural networks where $H$ is the number of different hyperparameter settings and $S$ is the number of different initial model weight configurations or seeds. The number of pool of trained neural networks in the pool may be in the range [5, 50]. The neural networks may be trained in parallel on a distributed computer system.

Then, for each of the $M$ trained neural networks $P$ other trained neural networks are selected (step 202), e.g. by sampling without replacement. In some implementations, for each trained neural network the $P$ other trained neural networks have the same hyperparameters and $P \leq S$. In other implementations the $P$ other trained neural networks are selected from the complete set of $M$ trained neural networks; optionally trained neural networks with the same hyperparameters may then be selected for further pairwise comparison.

The set of evaluation data items is then encoded using each of the trained neural networks to determine a respective set of latent representations (step 204). The process then determines a measure of similarity between the sets of latent representations (step 206), e.g. by comparing the set of latent representations for each of the $M$ trained neural networks with the sets of latent representations for each of the $P$ other trained neural networks, i.e. $P$ pairwise comparisons. The pairwise comparisons are then used to determine a respective disentanglement score for each of the $M$ trained neural networks (step 208). In implementations the pairwise comparisons are used to determine a respective disentanglement score for each pairwise comparison, and the $P$ disentanglement scores are then aggregated for each of the $M$ trained neural networks to obtain the disentanglement score (UDR score) for each trained neural network. For example a median of the $P$ disentanglement scores may be used as the (aggregate) disentanglement score for the trained neural network.

The process may then select one or more of the trained neural networks with an optimum e.g. highest disentanglement score (step 210). Once a trained neural network has been selected it may be used e.g. without further training, or hyperparameters of the neural network may be used to define one or more further neural networks with different seeds e.g. for a further selection process.

Steps of the process of FIG. 2, including particularly one or more of training the neural networks, encoding the evaluation data set, and making the pairwise comparisons, may be performed in parallel.

In some implementations making a pairwise comparison between two sets of latent representations involves comparing each individual dimension or component of one latent variable representation to each individual dimension or component of another latent variable representation. This may be done by comparing the responses of the components of the latent variable representations over the set of evaluation data items.

Thus if each latent variable representation is defined by a vector with $L$ components an $L \times L$ similarity matrix $R_{ij}$ between first and second trained neural networks $i, j$ of the pair may be determined. (Here $R_{ij}$ denotes a matrix not an element of the matrix). In the similarity matrix each entry represents a similarity between a component of a respective first latent variable representation $z_i$ and a component of a respective second latent variable representation $z_j$. Calculating the full $L \times L$ similarity matrix is one way of facilitating a permutation invariant disentanglement score.

In implementations absolute values of the entries $|R_{ij}|$ are taken so that disentanglement score is invariant with respect to a sign (order) change of the encoding.

To allow the disentanglement score to be relatively immune to the number of informative components of the latent variable representation discovered by a trained neural network, the disentanglement score may be divided by the average number of informative latent variables discovered by the two compared neural networks. This is useful when the trained neural networks are VAE-based because these can learn to switch off some latent variable components, effectively disregarding their values by learning a distribution for the component which matches a prior for the VAE. Thus a VAE can enter a "polarized regime" where some latent variable components are used and others are not.

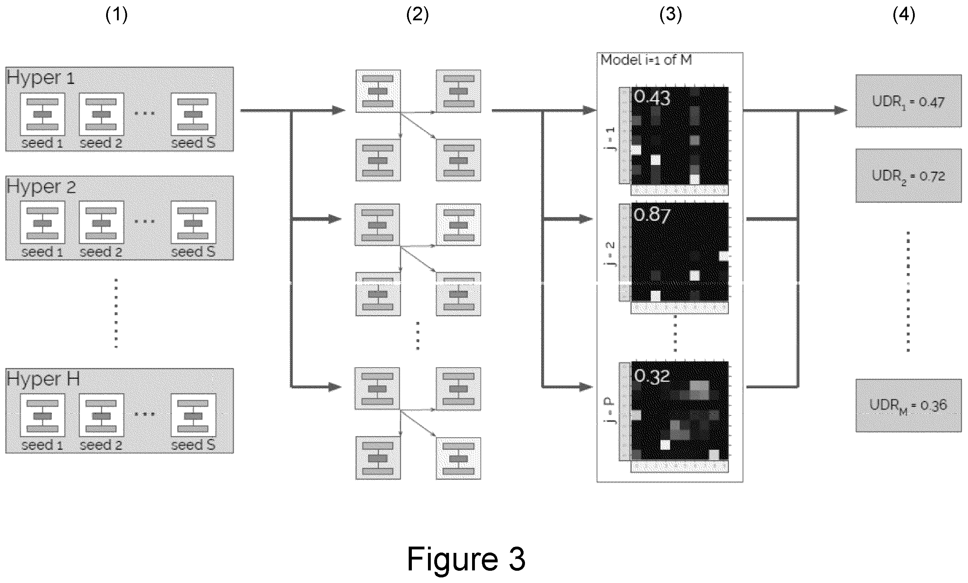

FIG. 3 shows a schematic illustration of the process of FIG. 2. At step (1) the pool of $M = H \times S$ neural networks 120A..N is trained. At step (2) $P$ trained neural networks are selected for pairwise comparison with each of the $M$ trained neural networks. At step (3) $M \times P$ similarity matrices are determined, one for each, and each of these is used to calculate a respective disentanglement score, $UDR_{ij}$, where $i = 1.. M, j = 1..P$. At step (4) the disentanglement scores are then aggregated for each of the $M$ models, i.e. $UDR_i = avg_j(UDR_{ij})$, where $avg_j(\cdot)$ may be a median over $P$ disentanglement scores.

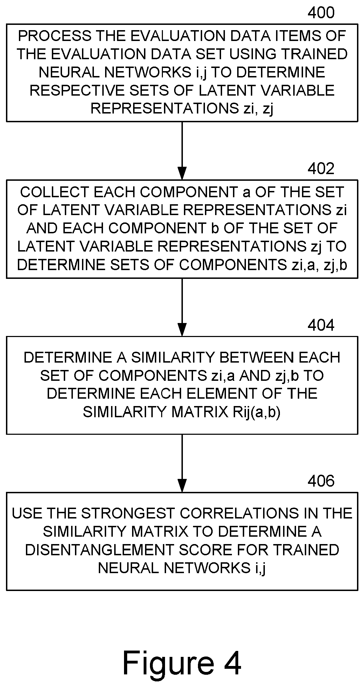

FIG. 4 is a flow diagram of an example process to compare a pair of trained neural networks. Thus FIG. 4 shows details of an example implementation of steps 204-208 of FIG. 2.

To compare a pair of trained neural networks $i,j$ the set of evaluation data items is processed by first and second trained neural networks of the pair, specifically by their respective encoder neural networks, to generate respective first and second sets of vectors of latent variable representations, i.e. respective sets of $z_i$, $z_j$ (step 400). In some implementations the evaluation data set may be a sample or batch from a larger data set.

To determine values for entries in the similarity matrix $R_{ij}$, each of the $L$ components, $a$, of the first latent variable representation is selected and each of the $L$ components, $b$, of the second latent variable representation is selected, where $a$ and $b$ are each in the range $1..L$. Each entry in the similarity matrix $R_{ij}$ is indexed by $a$ and $b$. For each of the selected components a respective vector, $z_{i,a}$, $z_{j,b}$, is constructed from the value of the component for each of the evaluation data items in the set of evaluation data items (step 402). For example for a data set $x_1, x_2, ..., x_N$, $z_{i,a}$ is the vector $z_{i,a}(x_1)$, $z_{i,a}(x_2), ..., z_{i,a}(x_N)$ where $z_{i,a}(x_1)$ is the latent variable representation obtained by encoding data item $x_1$ using the encoder of trained neural network $i$, and so forth. Where the encoder neural network defines parameters of a distribution for each component, a mean of the distribution may be used as the value of the component or a value may be sampled from the distribution. Depending upon the implementation vectors $z_{i,a}$, $z_{j,b}$ may be constructed implicitly, i.e. elements of these vectors may be accessed by indexing a larger data structure.

The process then determines similarities between the sets of first and second components of the first and second vectors of latent variable representations i.e. between each $z_{i,a}$ and $z_{j,b}$ to determine a value for each element $R_{ij}(a, b)$ of the

similarity matrix $R_{ij}$ (step 404).

In one example implementation the process regresses the set of first components $z_{i,a}$ onto each of the components of the second sets of vectors of latent variable representation, i.e. onto each of $z_{j,1} \ldots z_{j,N}$, e.g. using linear regression such as Lasso regression. The similarity matrix row $R_{ij}(a)$ is then filled in using the weights of the regression for $b$ = 1..N. This is performed for each of the $L$ values of $a$. In implementations the absolute values of the weights are used for the entries in the similarity matrix. In implementations the latent variable representations are normalized per component so that the relative importance of the components is more accurately represented. Using Lasso regression can result in a relatively "clean" similarity matrix, that is with only a few significant elements, as illustrated later.

In another example implementation Spearman's correlation is used to determine the similarity, for example according to $R_{ij}(a, b) = Corr(z_{i,a}, z_{j,b})$ where $Corr(\cdot)$ is Spearman's correlation. This is based on the recognition that if there is similarity between $z_{i,a}$ and $z_{j,b}$ there should be a monotonic relationship between them, but a linear relationship may not be present because the geometries of the representational spaces of the two trained neural networks i and $j$ may vary.

Once the similarity matrix, $R_{ij}$, has been determined it is used to calculate a disentanglement score, which is a measure of similarity of the latent representations of the trained neural networks $i$ and $j$. In one implementation the strongest correlation i.e. largest entry, in each row and column of the similarity matrix is identified and these are combined, e.g. according to a weighted average, to determine the disentanglement score (step 406).

The weighted average may include only "informative" components of the latent variable representations. An informative component may be one which encodes more than a threshold measure of information from an encoded input data item. For example where the latent variable representation $z$ of a data item $x$ is defined by a posterior distribution $q(z|x)$ an informative component may be one for which a measure of divergence between the posterior distribution and a prior distribution $p(z)$ is greater than a threshold value. If KL divergence is used as the measure of divergence the threshold value may be e.g. 0.01 as typically an informative component has $KL \gg 0.01$ and an uninformative component has $KL \ll 0.01$.

In one implementation a disentanglement score $UDR_{ij}$ may be calculated as

$$UDR_{ij} = \frac{1}{d_a + d_b}\left[\sum_b \frac{r_a^2 * I_{KL}(b)}{\sum_a R(a,b)} + \sum_a \frac{r_b^2 * I_{KL}(a)}{\sum_b R(a,b)}\right]$$

where $r_a = \max_a R(a,b), r_b = \max_b R(a,b)$, $I_{KL}(\cdot)$ denotes an informative latent where $I_{KL}(a)$ = 1 if the component $a$ is informative (e.g. $KL(q(z_a|x) \| p(z_a)) > 0.01$) and 0 otherwise, $d_a = \Sigma_a I_{KL}(a)$, and $d_b = \Sigma_b I_{KL}(b)$. Then, as previously described, a disentanglement score for the trained neural network i, $UDR_i = avg_j(UDR_{ij})$. A trained neural network may be selected according to its disentanglement score or e.g. according to its disentanglement score per number of informative latent variable components $d = \Sigma I_{KL}$ i.e. per number of discovered factors. This latter can be useful if it is desirable to discover more factors at the possible expense of increased entanglement.

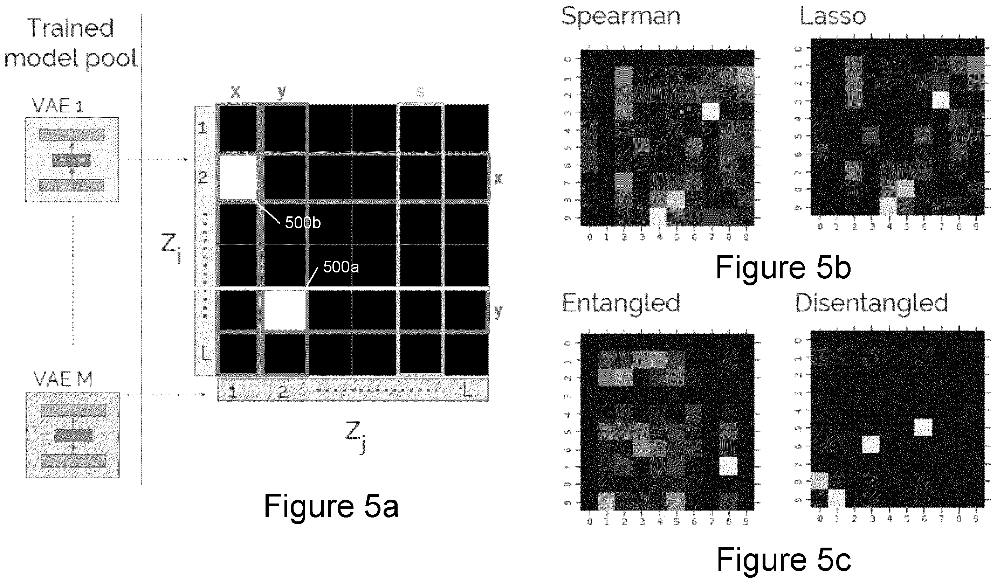

FIG. 5a shows a schematic illustration of a similarity matrix between two trained neural networks $i,j$ each of which has a perfectly disentangled representation, neural network $i$ representing two positions $x,y$ of an object and neural network $j$ representing the two positions $x,y$ and an additional generative factor, a size s of the object. The two highlighted squares 500a,b represent elements of the similarity matrix $R_{ij}$ having a high similarity between components of the latent variable representation, i.e. the $x$ and $y$ object positions.

FIG. 5b shows examples of calculated similarity matrices using, on the left, Spearman's correlation and, on the right, Lasso regression, for the same pair of neural networks. FIG. 5c shows, on the left, an example of a similarity matrix for pair of trained neural networks including a neural network with an entangled latent variable representation and, on the right, an example of a similarity matrix for pair of trained neural networks with disentangled latent variable representations (both calculated using Lasso regression).

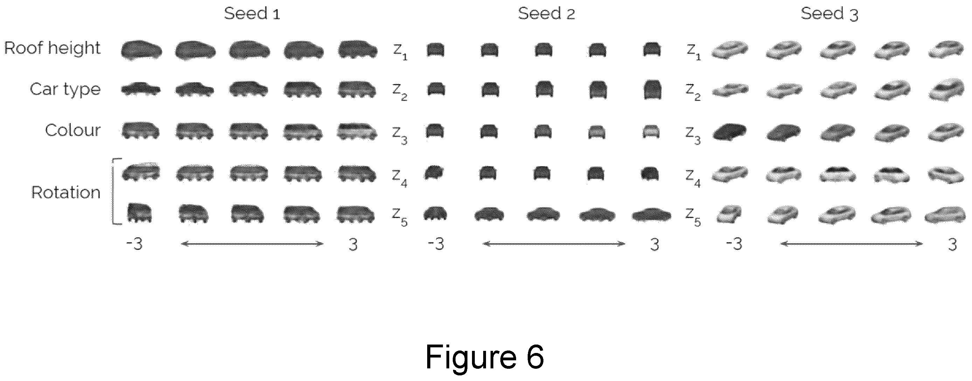

FIG. 6 illustrates behavior of disentangled latent variables in a trained neural network selected by the above-described method. In the example of FIG. 6 the trained neural network is based on a VAE and a "seed" latent representation is generated by encoding an image of a car. To illustrate the factors encoded by the latent variables one component of the latent representation is varied at a time (from -3 to 3) and the effect of varying the component is shown by passing the latent representation to a decoder of the VAE to generate the output images. The decoded factor of variation can thus be visualized; in the example of Figure 6 the selected trained neural network extracts a disentangled representation of the features of roof height, car type, car color, and car rotation (two components). The factors are consistent for different seeds, i.e. they have a consistent semantic meaning for different input data items, showing that the factors are well disentangled.

Merely by way of example, one type of trained neural network with which the above described method may be used is a variational autoencoder (VAE)-based neural network. In a VAE the loss function typically includes a first, reconstruction loss term $\log p_\theta(x|z)$, where $\theta$ denotes parameters of the previously described decoder neural network, and a second term, $-KL(q_\phi(z|x) \| p(z))$ where $\phi$ denotes parameters of the previously described encoder neural network. To encourage disentangling the second term may be given a weight $\beta > 1$ (a $\beta$ - *VAE*) or modified in some more complex manner. During training an output data item is generated by sampling a latent variable from the posterior distribution and decoding this into an output data item using the decoder neural network. The VAE is trained to minimize the loss function by backpropagating gradients through the decoder and encoder neural networks, reparameterizing the sampled latent variable as a deterministic latent variable plus noise.

For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory program carrier for execution by, or to control the operation of, data processing apparatus. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them. The computer storage medium is not, however, a propagated signal.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit). For example, the processes and logic flows can be performed by and apparatus can also be implemented as a graphics processing unit (GPU).

Computers suitable for the execution of a computer program include, by way of example, can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination.

In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. In certain implementations, multitasking and parallel processing may be advantageous.

**Claims**

1. A method for automatically providing a computer-implemented neural network with a disentangled latent variable representation of an input data item, the method comprising:

   obtaining a pool of trained neural networks (120A..N), wherein each trained neural network is a computer-implemented neural network comprising at least an encoder neural network (122A..N) to encode an input data item as a latent representation of the data item (124A..N); and
   determining an unsupervised selection of one of the trained neural networks, comprising:

   obtaining an evaluation data set (140) comprising a set of evaluation data items (142);
   encoding the set of evaluation data items using each of the trained neural networks to determine a respective set of latent representations for each of the trained neural networks;
   determining a measure of similarity between the sets of latent representations of the trained neural networks; and
   selecting one of the trained neural networks using the measure of similarity to provide a computer-implemented neural network with a disentangled latent representation of an input data item, wherein the selected computer-implemented neural network is configured to process an input data item comprising an image, audio or sensor data item to identify real-world factors responsible for generating the data item, and wherein the disentangled latent representation characterizes the data item in terms of latent variables that describe the data item;

the method further comprising using the provided computer-implemented neural network with the disentangled latent variable representation in a data storage and/or transmission system.

2. A method as claimed in claim 1 comprising obtaining the pool of trained neural networks by training the neural networks in parallel on a distributed computing system, and wherein determining the measure of similarity between the sets of latent representations of the trained neural networks is performed between pairs or groups of the trained neural networks as a set of parallel tasks on the distributed computing system.

3. A method as claimed in claim 1 or 2 wherein the latent representation comprises a vector of latent values.

4. A method as claimed in claim 3 comprising determining a multivariate posterior distribution for the latent representation of the input data item and determining the latent representation from the multivariate posterior distribution.

5. A method as claimed in claim 3 or 4 wherein the measure of similarity is invariant to one or more of: i) permutation of an order of the latent values, ii) a sign of the latent values, and iii) whether the latent representation of one of the trained neural networks is a subset of the latent representation of another of the trained neural networks.

6. A method as claimed in any one of claims 1-5 wherein determining the measure of similarity between the sets of latent representations of the trained neural networks comprises, for each of the trained neural networks, making a pairwise comparison between the trained neural network and each of P other trained neural networks in the pool and determining a disentanglement score for the trained neural network from the pairwise comparisons; in particular: wherein selecting one of the trained neural networks comprises determining a ranking of the trained neural networks using the disentanglement score and selecting a highest ranking trained neural network.

7. A method as claimed in claim 6 wherein the latent representation comprises a vector of latent values, and wherein determining the disentanglement score for the pairwise comparison comprises comparing a first set of vectors of latent values produced by encoding the set of evaluation data items using a first of the compared trained neural networks and a second set of vectors of latent values produced by encoding the set of evaluation data items using second of the compared trained neural networks.

8. A method as claimed in claim 7 wherein each latent value is defined by a component of the vector of latent values, wherein comparing the first and second sets of vectors of latent values comprises determining a similarity matrix, wherein each entry in the similarity matrix represents a similarity between a set of first components of the first set of vectors and a set of second components of the second set of vectors; and wherein determining the disentanglement score comprises determining the disentanglement score from the similarity matrix; in particular:

> comprising determining a similarity between the set of first components of the first set of vectors and the set of second components of the second set of vectors by determining a rank correlation between the set of first components and the set of second components; or
> comprising determining a row of values for the similarity matrix by regressing the set of first components of the first set of vectors on each of the components of the second set of vectors to determine a weight of each of the components of the second set of vectors for the row of values of the similarity matrix.

9. A method as claimed in claim 8 wherein comparing the first and second sets of vectors of latent values further comprises taking the absolute value of each entry in the similarity matrix.

10. A method as claimed in any one of claims 8-9 wherein determining the disentanglement score from the similarity matrix comprises determining the disentanglement score from a largest entry in each row and/or column of the similarity matrix.

11. A method as claimed in any one of claims 1-10 wherein each trained neural network comprises a trained variational autoencoder neural network.

12. A method as claimed in any one of claims 1-11 wherein the latent representation of each trained neural network comprises a vector with the same number of latent values, and wherein each trained neural network has one or both of i) a different set of hyperparameter values, and ii) a different set of weight initialization values.

13. A system comprising one or more computers and one or more storage devices storing instructions that when executed by the one or more computers cause the one or more computers to perform the operations of the respective method of any one of claims 1-12.

14. One or more computer storage media storing instructions that when executed by one or more computers cause the one or more computers to implement the method of any one of claims 1-12 or the system of claim 13.

**Patentansprüche**

1. Verfahren zum automatischen Bereitstellen eines computerimplementierten neuronalen Netzwerks mit einer entwirrten latenten Variablendarstellung eines Eingangsdatenelements, wobei das Verfahren Folgendes umfasst:

Erlangen eines Pools von trainierten neuronalen Netzwerken (120A..N), wobei jedes trainierte neuronale Netzwerk ein computerimplementiertes neuronales Netzwerk ist, das mindestens ein neuronales Codierernetzwerk (122A..N) umfasst, um ein Eingabedatenelement als eine latente Darstellung des Datenelements (124A..N) zu codieren; und
Bestimmen einer unüberwachten Auswahl eines der trainierten neuronalen Netzwerke, umfassend:

Erlangen eines Bewertungsdatensatzes (140), der einen Satz von Bewertungsdatenelementen (142) umfasst;
Codieren des Bewertungsdatenelementen unter Verwendung jedes der trainierten neuronalen Netzwerke, um einen entsprechenden Satz von latenten Darstellungen für jedes der trainierten neuronalen Netzwerke zu bestimmen;
Bestimmen eines Maßes von Ähnlichkeit zwischen den Sätzen von latenten Darstellungen der trainierten neuronalen Netzwerke; und Auswählen eines der trainierten neuronalen Netze unter Verwendung des Maßes von Ähnlichkeit, um ein computerimplementiertes neuronales Netzwerk mit einer entwirrten latenten Darstellung eines Eingabedatenelements bereitzustellen, wobei das ausgewählte computerimplementierte neuronale Netzwerk dazu konfiguriert ist, ein Eingabedatenelement zu verarbeiten, das ein Bild-, Audio- oder Sensordatenelement umfasst, um reale Faktoren zu identifizieren, die für das Erzeugen des Datenelements verantwortlich sind, und wobei die entwirrte latente Darstellung das Datenelement im Sinne von latenten Variablen kennzeichnet, die das Datenelement beschreiben;
wobei das Verfahren ferner das Verwenden des bereitgestellten computerimplementierten neuronalen Netzwerks mit der entwirrten latenten Variablendarstellung in einem Datenspeicher- und/oder Übertragungssystem umfasst.

2. Verfahren nach Anspruch 1, umfassend Erlangen des Pools von trainierten neuronalen Netzwerken durch paralleles Trainieren der neuronalen Netzwerke auf einem verteilten Rechensystem, und wobei das Bestimmen des Maßes von Ähnlichkeit zwischen den Sätzen von latenten Darstellungen der trainierten neuronalen Netzwerke zwischen Paaren oder Gruppen der trainierten neuronalen Netzwerke als ein Satz von parallelen Aufgaben auf dem verteilten System durchgeführt wird.

3. Verfahren nach Anspruch 1 oder 2, wobei die latente Darstellung einen Vektor von latenten Werten umfasst.

4. Verfahren nach Anspruch 3, umfassend Bestimmen einer multivariaten posterioren Verteilung für die latente Darstellung des Eingabedatenelements und Bestimmen der latenten Darstellung aus der multivariaten posterioren Verteilung.

5. Verfahren nach Anspruch 3 oder 4, wobei das Maß von Ähnlichkeit invariant ist gegenüber einem oder mehreren von: i) Permutation einer Reihenfolge der latenten Werte, ii) einem Vorzeichen der latenten Werte und iii) ob die latente Darstellung eines der trainierten neuronalen Netzwerke eine Teilmenge der latenten Darstellung eines anderen der trainierten neuronalen Netzwerke ist.

6. Verfahren nach einem der Ansprüche 1-5, wobei das Bestimmen des Maßes von Ähnlichkeit zwischen den Sätzen latenter Darstellungen der trainierten neuronalen Netzwerke umfasst, dass für jedes der trainierten neuronalen Netzwerke ein paarweiser Vergleich zwischen dem trainierten neuronalen Netzwerk und jedem von P anderen trainierten neuronalen Netzwerken in dem Pool vorgenommen wird und aus den paarweisen Vergleichen eine Entwirrungsbewertung für das trainierte neuronale Netzwerk bestimmt wird; insbesondere:
wobei das Auswählen eines der trainierten neuronalen Netzwerke Bestimmen einer Rangfolge der trainierten neuronalen Netzwerke unter Verwendung der Entwirrungsbewertung und Auswählen eines trainierten neuronalen Netzwerks mit der höchsten Rangfolge umfasst.

7. Verfahren nach Anspruch 6, wobei die latente Darstellung einen Vektor latenter Werte umfasst und wobei das Bestimmen der Entwirrungsbewertung für den paarweisen Vergleich Vergleichen eines ersten Satzes von Vektoren latenter Werte, die durch Codieren des Satzes von Bewertungsdatenelementen unter Verwendung eines ersten der verglichenen trainierten neuronalen Netzwerke erzeugt wurden, und eines zweiten Satzes von Vektoren latenter Werte, die durch Codieren des Satzes von Bewertungsdatenelementen unter Verwendung eines zweiten der verglichenen trainierten neuronalen Netzwerke erzeugt wurden, umfasst.

8. Verfahren nach Anspruch 7, wobei jeder latente Wert durch eine Komponente des Vektors latenter Werte definiert ist, wobei der Vergleich des ersten und zweiten Satzes von Vektoren latenter Werte Bestimmen einer Ähnlichkeitsmatrix umfasst, wobei jeder Eintrag in der Ähnlichkeitsmatrix eine Ähnlichkeit zwischen einem Satz erster Komponenten des ersten Satzes von Vektoren und einem Satz zweiter Komponenten des zweiten Satzes von Vektoren darstellt; und wobei das Bestimmen der Entwirrungsbewertung Bestimmen der Entwirrungsbewertung aus der Ähnlichkeitsmatrix umfasst; insbesondere:

   umfassend Bestimmen einer Ähnlichkeit zwischen dem Satz erster Komponenten des ersten Satzes von Vektoren und dem Satz zweiter Komponenten des zweiten Satzes von Vektoren durch Bestimmen einer Rangfolgekorrelation zwischen dem Satz erster Komponenten und dem Satz zweiter Komponenten; oder umfassend Bestimmen einer Zeile von Werten für die Ähnlichkeitsmatrix durch Zurückführen des Satzes von ersten Komponenten des ersten Satzes von Vektoren auf jede der Komponenten des zweiten Satzes von Vektoren, um ein Gewicht jeder der Komponenten des zweiten Satzes von Vektoren für die Zeile von Werten der Ähnlichkeitsmatrix zu bestimmen.

9. Verfahren nach Anspruch 8, wobei das Vergleichen des ersten und des zweiten Satzes von Vektoren latenter Werte ferner Erfassen des Absolutwerts jedes Eintrags in der Ähnlichkeitsmatrix umfasst.

10. Verfahren nach einem der Ansprüche 8-9, wobei das Bestimmen der Entwirrungsbewertung aus der Ähnlichkeitsmatrix Bestimmen der Entwirrungsbewertung aus einem größten Eintrag in jeder Zeile und/oder Spalte der Ähnlichkeitsmatrix umfasst.

11. Verfahren nach einem der Ansprüche 1-10, wobei jedes trainierte neuronale Netzwerk ein trainiertes neuronales Variations-Autocodierer-Netzwerk umfasst.

12. Verfahren nach einem der Ansprüche 1-11, wobei die latente Darstellung jedes trainierten neuronalen Netzwerks einen Vektor mit der gleichen Anzahl latenter Werte aufweist und wobei jedes trainierte neuronale Netzwerk einen oder beide von i) einem unterschiedlichen Satz von Hyperparameterwerten und ii) einem unterschiedlichen Satz von Gewichtsinitialisierungswerten aufweist.

13. System, umfassend einen oder mehrere Computer und eine oder mehrere Speichervorrichtungen, die Anweisungen speichern, die, wenn sie von dem einen oder den mehreren Computern ausgeführt werden, den einen oder die mehreren Computer veranlassen, die Operationen des jeweiligen Verfahrens nach einem der Ansprüche 1-12 durchzuführen.

14. Ein oder mehrere Computerspeichermedien, die Anweisungen speichern, die bei Ausführung durch einen oder mehrere Computer den einen oder die mehreren Computer veranlassen, das Verfahren nach einem der Ansprüche 1-12 oder das System nach Anspruch 13 zu implementieren.

**Revendications**

1. Procédé permettant de fournir automatiquement à un réseau neuronal mis en œuvre par ordinateur une représentation désenchevêtrée de variables latentes d'un élément de données d'entrée, le procédé comprenant :

l'obtention d'un ensemble de réseaux neuronaux entraînés (120A..N), dans lequel chaque réseau neuronal entraîné est un réseau neuronal mis en œuvre par ordinateur comprenant au moins un réseau neuronal codeur (122A..N) pour coder un élément de données d'entrée sous forme de représentation latente de l'élément de données (124A..N) ; et

la détermination d'une sélection non supervisée de l'un des réseaux neuronaux entraînés, comprenant :

l'obtention d'un ensemble de données d'évaluation (140) comprenant un ensemble d'éléments de données d'évaluation (142) ;

le codage de l'ensemble d'éléments de données d'évaluation à l'aide de chacun des réseaux neuronaux entraînés pour déterminer un ensemble respectif de représentations latentes pour chacun des réseaux neuronaux entraînés ;

la détermination d'une mesure de similarité entre les ensembles de représentations latentes des réseaux neuronaux entraînés ; et

la sélection de l'un des réseaux neuronaux entraînés à l'aide de la mesure de similarité pour fournir à un réseau neuronal mis en œuvre par ordinateur une représentation latente désenchevêtrée d'un élément de données d'entrée, dans lequel le réseau neuronal mis en œuvre par ordinateur sélectionné est configuré pour traiter un élément de données d'entrée comprenant une image, un élément de données audio ou un élément de données de capteur pour identifier des facteurs du monde réel responsables de la génération de l'élément de données, et dans lequel la représentation latente désenchevêtrée caractérise l'élément de données en termes de variables latentes qui décrivent l'élément de données ;

le procédé comprend également l'utilisation du réseau neuronal mis en œuvre par ordinateur fourni avec la représentation désenchevêtrée de variables latentes dans un système de stockage et/ou de transmission de données.

2. Procédé selon la revendication 1 comprenant l'obtention de l'ensemble de réseaux neuronaux entraînés en entraînant les réseaux neuronaux en parallèle sur un système informatique distribué, et dans lequel la détermination de la mesure de similarité entre les ensembles de représentations latentes des réseaux neuronaux entraînés est réalisée entre paires ou groupes des réseaux neuronaux entraînés comme un ensemble de tâches parallèles sur le système informatique distribué.

3. Procédé selon la revendication 1 ou 2, dans lequel la représentation latente comprend un vecteur de valeurs latentes.

4. Procédé selon la revendication 3 comprenant la détermination d'une distribution postérieure multivariée pour la représentation latente de l'élément de données d'entrée et la détermination de la représentation latente à partir de la distribution postérieure multivariée.

5. Procédé selon la revendication 3 ou 4, dans lequel la mesure de similarité est invariante à l'un ou plusieurs des éléments suivants : i) une permutation d'un ordre des valeurs latentes, ii) un signe des valeurs latentes, et iii) si la représentation latente de l'un des réseaux neuronaux entraînés est un sous-ensemble de la représentation latente d'un autre des réseaux neuronaux entraînés.

6. Procédé selon l'une quelconque des revendications 1 à 5, dans lequel la détermination de la mesure de similarité entre les ensembles de représentations latentes des réseaux neuronaux entraînés comprend, pour chacun des réseaux neuronaux entraînés, la réalisation d'une comparaison par paires entre le réseau neuronal entraîné et chacun des P autres réseaux neuronaux entraînés dans l'ensemble et la détermination d'un score de désenchevêtrement pour le réseau neuronal entraîné à partir des comparaisons par paires ; en particulier :

dans lequel la sélection de l'un des réseaux neuronaux entraînés comprend la détermination d'un classement des réseaux neuronaux entraînés à l'aide du score de désenchevêtrement et la sélection du réseau neuronal entraîné le mieux classé.

7. Procédé selon la revendication 6, dans lequel la représentation latente comprend un vecteur de valeurs latentes, et dans lequel la détermination du score de désenchevêtrement pour la comparaison par paires comprend la comparaison d'un premier ensemble de vecteurs de valeurs latentes produits en codant l'ensemble d'éléments de données d'évaluation à l'aide d'un premier des réseaux neuronaux entraînés comparés et d'un second ensemble de vecteurs de valeurs latentes produits en codant l'ensemble d'éléments de données d'évaluation à l'aide d'un second des réseaux neuronaux entraînés comparés.

8. Procédé selon la revendication 7, dans lequel chaque valeur latente est définie par une composante du vecteur de valeurs latentes, dans lequel la comparaison des premier et second ensembles de vecteurs de valeurs latentes comprend la détermination d'une matrice de similarité, dans lequel chaque élément dans la matrice de similarité représente une similarité entre un ensemble de premières composantes du premier ensemble de vecteurs et un ensemble de secondes composantes du second ensemble de vecteurs ; et dans lequel la détermination du score de désenchevêtrement comprend la détermination du score de désenchevêtrement à partir de la matrice de similarité ; en particulier :

comprenant la détermination d'une similarité entre l'ensemble de premières composantes du premier ensemble de vecteurs et l'ensemble de secondes composantes du second ensemble de vecteurs, en déterminant une corrélation de rang entre l'ensemble de premières composantes et l'ensemble de secondes composantes ; ou comprenant la détermination d'une ligne de valeurs pour la matrice de similarité en régressant l'ensemble de premières composantes du premier ensemble de vecteurs sur chacune des composantes du second ensemble de vecteurs pour déterminer un poids de chacune des composantes du second ensemble de vecteurs pour la ligne de valeurs de la matrice de similarité.

9. Procédé selon la revendication 8, dans lequel la comparaison des premier et second ensembles de vecteurs de valeurs latentes comprend également la prise de la valeur absolue de chaque entrée dans la matrice de similarité.

10. Procédé selon l'une quelconque des revendications 8 à 9, dans lequel la détermination du score de désenchevêtrement à partir de la matrice de similarité comprend la détermination du score de désenchevêtrement à partir de la plus grande entrée de chaque ligne et/ou colonne de la matrice de similarité.

11. Procédé selon l'une quelconque des revendications 1 à 10, dans lequel chaque réseau neuronal entraîné comprend un réseau neuronal auto-codeur variationnel entraîné.

12. Procédé selon l'une quelconque des revendications 1 à 11, dans lequel la représentation latente de chaque réseau neuronal entraîné comprend un vecteur avec le même nombre de valeurs latentes, et dans lequel chaque réseau neuronal entraîné possède un ou les deux éléments suivants : i) un ensemble différent de valeurs d'hyperparamètres, et ii) un ensemble différent de valeurs d'initialisation des poids.

13. Système comprenant un ou plusieurs ordinateurs et un ou plusieurs dispositifs de stockage stockant des instructions qui, lorsqu'elles sont exécutées par les un ou plusieurs ordinateurs, amènent les un ou plusieurs ordinateurs à réaliser les opérations du procédé respectif selon l'une quelconque des revendications 1 à 12.

14. Un ou plusieurs supports de stockage informatique stockant des instructions qui, lorsqu'elles sont exécutées par un ou plusieurs ordinateurs, amènent les un ou plusieurs ordinateurs à mettre en œuvre le procédé selon l'une quelconque des revendications 1 à 12 ou le système selon la revendication 13.

Figure 1

Data store 110

Decoder Neural network 126

Latents 124

Encoder Neural network 122

Decoder Neural network 126

Latents 124

Encoder Neural network 122

Decoder Neural network 126

Latents 124

Encoder Neural network 122

Decoder Neural network 126

Latents 124

Encoder Neural network 122

Evaluation data set 140

Evaluation data item 142

Evaluation data item 142

Similarity measuring subsystem 150

Scoring subsystem 152

Selection subsystem 154

Disentangled trained neural network(s) 156

100

EP 3 903 239 B1

18

200

OBTAIN A POOL OF *M* TRAINED NEURAL NETWORKS EACH INCLUDING AN ENCODER NEURAL NETWORK

202

FOR EACH TRAINED NEURAL NETWORK IN THE POOL SELECT *P* OTHER TRAINED NEURAL NETWORKS FROM THE POOL

204

ENCODE THE SET OF EVALUATION DATA ITEMS USING EACH OF THE TRAINED NEURAL NETWORKS TO DETERMINE RESPECTIVE SETS OF LATENT REPRESENTATIONS

206

DETERMINE *M* x *P* MEASURES OF SIMILARITY BETWEEN THE SETS OF LATENT REPRESENTATIONS

208

DETERMINE A DISENTANGLEMENT SCORE FOR EACH OF THE *M* TRAINED NEURAL NETWORKS

210

SELECT ONE OR MORE TRAINED NEURAL NETWORKS WITH AN OPTIMUM DISENTANGLEMENT SCORE

# Figure 2

Figure 3

400

PROCESS THE EVALUATION DATA ITEMS OF THE EVALUATION DATA SET USING TRAINED NEURAL NETWORKS i,j TO DETERMINE RESPECTIVE SETS OF LATENT VARIABLE REPRESENTATIONS zi, zj

402

COLLECT EACH COMPONENT a OF THE SET OF LATENT VARIABLE REPRESENTATIONS zi AND EACH COMPONENT b OF THE SET OF LATENT VARIABLE REPRESENTATIONS zj TO DETERMINE SETS OF COMPONENTS zi,a, zj,b

404

DETERMINE A SIMILARITY BETWEEN EACH SET OF COMPONENTS zi,a AND zj,b TO DETERMINE EACH ELEMENT OF THE SIMILARITY MATRIX Rij(a,b)

406

USE THE STRONGEST CORRELATIONS IN THE SIMILARITY MATRIX TO DETERMINE A DISENTANGLEMENT SCORE FOR TRAINED NEURAL NETWORKS i,j

# Figure 4

Figure 5a

Figure 5b

Figure 5c

EP 3 903 239 B1

Figure 6

## REFERENCES CITED IN THE DESCRIPTION

**Non-patent literature cited in the description**

- **LOCATELLO et al.** Challenging Common Assumptions in the Unsupervised Learning of Disentangled Representations. *arXiv:1811.12359*
- a Semi-supervised Disentangled VAE. *arXiv:1709.05047*
- **D. P. KINGMA** ; **M. WELLING**. *arXiv: 1312.6114*
- **HIGGINS et al.** $\beta$-VAE: Learning basic visual concepts with a constrained variational framework. *ICLR*, 2017